# EUROPEAN PATENT APPLICATION

(11) **EP 4 722 169 A1**
(43) Date of publication of application: **08.04.2026**
(21) Application number: 25207155.0
(22) Date of filing: 07.10.2025
(51) Int. Cl.: C02F 3/00, C02F 3/06, C02F 3/10, C02F 3/04

(54) **A WASTEWATER TREATMENT DEVICE AND METHOD**

(30) Priority: 07.10.2024 IT 202400022224
(71) Applicant: Bathbact Societá A Responsabilitá Limitata Semplificata, 47923 Rimini (RN) (IT)
(72) Inventor: CURCIO, Matteo, 31029 VITTORIO VENETO (TV) (IT)
(74) Representative: Scipioni, Luca

(57) **Abstract**

A wastewater treatment device comprises: a liquid container for containing wastewater; an oxygen supply unit for supplying oxygen to the container; a mixed microbial consortium of aerobic microorganisms comprising halophilic microorganisms; a microbial bed, placed inside the container, on which the microorganisms of the mixed microbial consortium grow and are in contact with the wastewater.

## Description

The present invention relates to a wastewater treatment device and method for treating wastewater.

In the last few decades, environmental concern regarding the treatment of urban waste has grown. Wastewater constitutes a large percentage of urban waste, the treatment of which has been a challenge. In fact, improper treatment of this wastewater may have serious impacts on the environment. At present, more than 40% of urban wastewater worldwide is not properly treated. Portable toilets, such as chemical toilets, are one of the sources generating urban wastewater. Traditionally, chemical solvents are used in those toilets for treating wastewater, with the aim of avoiding contamination and reducing undesirable odors. However, the use of these chemical solvents is not sustainable, and the disposal thereof impacts the environment.

More sustainable methods have been adopted in urban water purification plants, including aerobic and anaerobic digestion, for more sustainable waste treatment. In fact, microbial and enzymatic agents are increasingly common in modern toilets to reduce odors by accelerating the digestion and decomposition of waste, without relying only on toxic additives or masking with fragrances.

For example, composting toilets are utilized where microorganisms are used to decompose solid materials by means of a process of biological decomposition.

Although these methods offer an environmentally-friendly solution, the efficiency and safety thereof still needs to be improved.

In this context, patent document EP3051992 describes a composting toilet with a fecal chamber and a urinary chamber.

Furthermore, patent document WO2023/021042 describes a wastewater treatment using anaerobic digestion.

Further examples of wastewater treatment systems are described in patent documents EP0699172B1 and US2007267346A. The object of the present invention is to provide a wastewater treatment system and a toilet, which overcome the drawbacks of the aforesaid prior art.

It is the object of the present invention to provide a particularly safe and efficient system and method for treating wastewater.

Said object is fully achieved by the apparatus and method, according to the present invention, which are characterized by the contents of the following claims.

According to an aspect of the present description, the present invention provides a wastewater treatment device. This wastewater may have different origins. The treatment device may also be used for treating other liquids. The wastewater treatment device comprises a liquid container. The liquid container is configured for containing wastewater. The wastewater treatment device includes an oxygen supply unit for providing oxygen to the container. Oxygen may be supplied to the aerobic microorganisms in different ways. For example, the oxygen supply unit may simply include openings for allowing air to pass inside the container. Alternatively, a device may be provided to supply oxygen (e.g., by means of a tube) in the container. The wastewater treatment device includes a mixed microbial consortium of microorganisms. In an example, the mixed microbial consortium of microorganisms includes aerobic microorganisms. In an example, a mixed microbial consortium of microorganisms comprises halophilic microorganisms. In another example, a mixed microbial consortium of microorganisms consists of halophilic microorganisms. The wastewater treatment device may include a microbial bed. The microbial bed is placed inside the container. In particular, the microorganisms of the mixed microbial consortium grow on the microbial bed. The microbial bed brings the microorganisms of the mixed microbial consortium into contact with the wastewater.

This solution allows obtaining a wastewater treatment system without using any chemical solvents and with no environmental impact. Thus, it is possible to manage and valorize the waste in a sustainable manner. This consortium includes various microorganisms and is adapted to treat different types of waste in a particularly efficient manner.

In particular, the efficiency of the wastewater treatment device is ensured by the ability of the microbes to process the waste and by the speed of said process.

The safety of the wastewater treatment device depends on the fact that the microbes of the consortium have no negative impact on human health and on the environment, as well as on the fact that these microorganisms grow in conditions adapted to inhibit the growth of other potentially harmful microbes inside the container.

In particular, the use of halophilic microorganisms has two advantages: on the one hand, we can add a saline charge to the degradation environment and prevent the growth of all undesirable microbes (except the microorganisms of the consortium), on the other hand, we can discourage possible environmental contamination, considering the difficulty of halophilic bacteria to survive outside the comfort environment thereof.

It should be noted that the microbial bed may be provided combined with, or without the liquid container and the supply unit. Therefore, according to an aspect of the present description, a microbial bed may be provided combined with a mixed microbial consortium of aerobic microorganisms, preferably comprising halophilic microorganisms. In another example, this microbial consortium may be a mixed microbial consortium of anaerobic microorganisms.

The microbial bed may be installed in various environments and sectors for treating wastewater, e.g., in a toilet without a sewer system, or in a cistern. For example, the bed may be connected to a part of the liquid container (or toilet wastewater collection surface), or placed inside this container in a suspended manner.

Therefore, according to an aspect of the present description, the present invention provides a microbial bed according to one or more aspects of the present description. The microorganisms according to one or more aspects of the present description are grown on the microbial bed, preferably in the form of a film.

In an example, the microbial bed may be a spherical body, or an elongated spherical body, or a pseudo spherical (e.g., elliptical) body. This body may be placed inside a toilet, in particular, on a wastewater collection surface of a toilet, or a cistern or any other container for wastewater, preferably floating. When the body is spherical, the body may have a diameter of 5 cm.

It should be noted that in an embodiment, the presence of the microbial bed is not essential. In general, the term "microbial bed" shall be understood in a broad sense, comprising any surface suitable for supporting the growth of the microorganisms of the microbial consortium. This surface may consist of a special element inserted in the container (or, in general, the wastewater treatment device), or one or more parts of the container (or, in general, the device itself) serving, in use, as a support for microbial growth.

In further configurations, the microorganisms may be kept in suspension in the liquid, without forming an adherent microbial bed, nonetheless continuing to perform the function of a biological treatment for the wastewater.

In an example, the microbial bed comprises a tray. The tray has a growth zone. The growth zone is free of holes. The wastewater accumulates in the growth zone. The microorganisms grow on the growth zone. The tray has a perforated zone through which the wastewater passes. In an example, the microbial bed comprises a plurality of trays. In this example, the trays of the plurality of trays may be aligned along a longitudinal axis. The trays of the plurality of trays are spaced apart from one another.

In an example, the trays of the plurality of trays are placed along the longitudinal axis. In particular, trays of the plurality of trays are placed along the longitudinal axis so that the perforated zone of each tray is offset from the perforated zone of the adjacent tray with respect to the longitudinal axis, so that the wastewater passing through the perforated zone of each tray falls onto the growth zone of the adjacent tray.

This solution allows obtaining a particularly efficient contact surface between the microorganisms and the wastewater.

The tray may comprise a plurality of pockets. Each pocket may include a lower wall and a plurality of side walls. The pockets of the plurality of pockets are separate from one another at the respective side walls. In an example, a first part of the pockets includes a lower wall free of holes, forming the growth zone, and a second part of the pockets includes a perforated lower wall, forming the perforated zone.

Each pocket may include a concave portion. The concave portion may be formed by the side walls. Each pocket may include a convex portion. The convex portion may be formed by the lower wall.

In an example, the wastewater treatment device includes a regulation unit. The regulation unit includes a temperature sensor and/or a pH sensor and/or a salt concentration sensor for detecting the temperature and/or the pH and/or the salt concentration inside the liquid container. The regulation system includes a regulation device for regulating the temperature and/or the pH and/or the salt concentration inside the liquid container in response to the detected value and according to a preset value for the temperature and/or the pH and/or the salt concentration.

This regulation of the aforesaid parameters allows obtaining a particularly reliable and efficient wastewater treatment.

A feedback control may also be provided for regulating the pH, the temperature, and the concentration of salt inside the liquid container.

In an example, the microbial consortium includes at least one of the following microbial families:
- Haloarcula;
- Marinobacterium;
- Marinobacter;
- Halomonas.

In an example, at least one of the following microbial species is included in the microbial consortium:
- Haloarcula vallismortis;
- Haloarcula quadrata;
- Haloarcula marismortui;
- Marinobacterium lutimaris;
- Marinobacterium litorale;
- Marinobacter nauticus;
- Marinobacter squelenovorans (i.e., M. squalenivorans);
- Marinobacter profunda (i.e., (M. profundi);
- Halomonas halodenitrificans;
- Halomonas subglaciescola;
- Psychromonas marina.

These microorganisms are capable of preserving the activity thereof, also in a harsh environment (as regards the salinity and/or temperature and/or pH), in which other (undesired) microbes grow. Thus, it is possible to create an unfavorable environment for the undesirable microbes without compromising the efficiency of the microorganisms of the consortium of microorganisms. This unfavorable environment is preferably created by regulating the salinity inside the container, and preferably by increasing the salinity. Alternatively, or in addition, it is possible to regulate the temperature and/or pH inside the container.

The selected microbes are efficient because they allow working at a wide temperature range (efficient process in various conditions) and they have the capacity to act as denitrifiers and/or users of aromatic and aliphatic substrates as a source of carbon. Carbon in a more accessible form, such as the one present in human waste without pre-treatment, is an optimum substrate. Furthermore, these microorganisms have aerobic metabolism, which is typically much faster than the anaerobic metabolism (efficient process because it is quick). Furthermore, these microorganisms grow in the form of a film, which means easy aeration and high efficiency in applications with small dimensions.

The selected microbes are safe because:
- they are classified with a low biological risk;
- they are found in nature, and no cases are known of pathologies arising from these species;
- they are halophilic; therefore, they survive better than the pathogens found in waste having high saline concentrations.

The optimal growth temperatures of these microbes range from 15°C to 37°C, and most of these are capable of surviving, albeit with a slower metabolism, below 10°C.

In particular, the salinity inside the container decreases after a few uses, and it is necessary to regulate the salinity to maintain efficiency.

It should be noted that the microbial consortium according to the present description may grow in a wide temperature range, since it includes various (thermophilic and thermophobic) microorganisms.

It should be noted that the features described above for the microbial bed and the consortium may be combined both when the wastewater treatment device is provided and when the microbial bed is provided in combination with the consortium of microorganisms, according to one or more aspects of the present description.

The microbial consortium according to the present description may comprise one or more of the microorganisms of the families or species listed above. In particular, it is not necessary for all the species or families to be present in the consortium at the same time, the consortium may include a single species, multiple species, or all the species indicated, following different combinations.

It should be noted that the mixed microbial consortium according to one or more aspects of the present description may be considered an autonomous entity regardless of the application thereof in the wastewater treatment device. In other words, the consortium may be provided, stored, cultivated, or used separately, without necessarily being associated with a container, a microbial bed or oxygen supply unit.

The microbial consortium may comprise one or more microorganisms of the families or species listed in one or more aspects of the present description, in any combination.

According to an aspect of the present description, the present invention provides a toilet. The toilet is without a sewer system. The toilet includes a structural frame. The toilet includes a toilet bowl. The toilet bowl is placed inside the structural frame. The toilet bowl has a waste collection surface.

The toilet includes a wastewater treatment device. The wastewater treatment device is coupled to the waste collection surface. The wastewater treatment device is in accordance with one or more aspects of the wastewater treatment device of the present description.

The toilet includes a wastewater drainage pipe for supplying the wastewater from the waste collection surface to the liquid container. In an example, the side surface of the toilet bowl has a perforated zone in connection with the liquid container.

The perforated zone is hostile to stagnation of wastewater and induces any undesired liquids (such as urine that has ended up outside the frame) to fall below the perforated zone, directly into the waste collection surface.

In particular, the waste may reach the container by means of the drain placed under the toilet seat, or indirectly by means of holes placed in the perforated zone, which are intended to limit the residence time of waste liquid close to the waste collection surface.

This configuration allows collecting wastewater, efficiently directing it into the container.

According to an aspect of the present description, the present invention provides a method for treating wastewater.

The method includes a step of providing a liquid container with the wastewater.

The method comprises a step of providing oxygen to the container.

The method comprises a step of providing the liquid container with a mixed microbial consortium of microorganisms. The microorganisms may be aerobic. The microorganisms may comprise halophilic microorganisms. The method comprises a step of growing the microorganisms of said mixed microbial consortium on a microbial bed, placed inside the container.

The method comprises a step of passing the wastewater through the microbial bed.

In an example, a plurality of trays is provided inside the liquid container. Only one single tray may also be provided. Each tray has a growth zone free of holes, where the wastewater accumulates and on which the microorganisms grow, and a perforated zone, through which the wastewater passes. In the example, in which more than one tray is provided, the trays may be placed so that they are aligned along a longitudinal axis and spaced apart from one another. The trays of the plurality of trays may be placed along the longitudinal axis so that the perforated zone of each tray is offset from the perforated zone of the adjacent tray with respect to the longitudinal axis, so that the wastewater passing through the perforated zone of each tray falls onto the growth zone of the adjacent tray.

In an example, a microorganism film is grown on the growth zone.

In an example, the method includes a step of regulating the temperature of the liquid container according to a preset temperature value. The value of the preset temperature is preferably in the range of 1-60°C.

The method may comprise a step of correcting the pH value of the liquid container according to a preset pH value. The preset pH value is preferably greater than 4 or less than 10.

The method may comprise a step of correcting the salt concentration of the medium used for the microorganisms according to a pre-set salt concentration value. The preset salt concentration value is preferably greater than 5%.

This and other features will become more apparent from the following description of a preferred embodiment, illustrated purely by way of nonlimiting example in the accompanying drawings, in which:

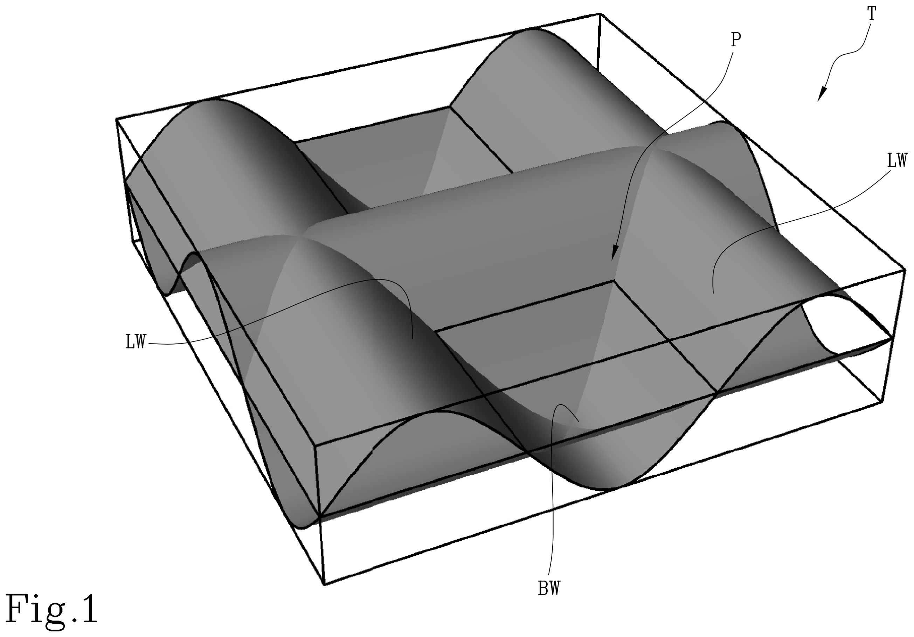

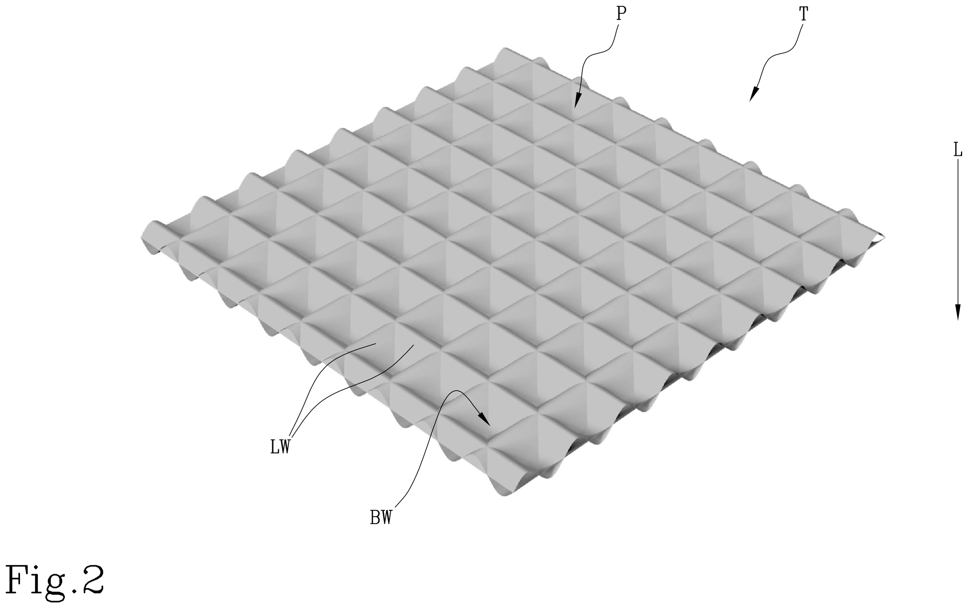

- figures 1 and 2 illustrate a microbial bed according to one or more aspects of the present description;

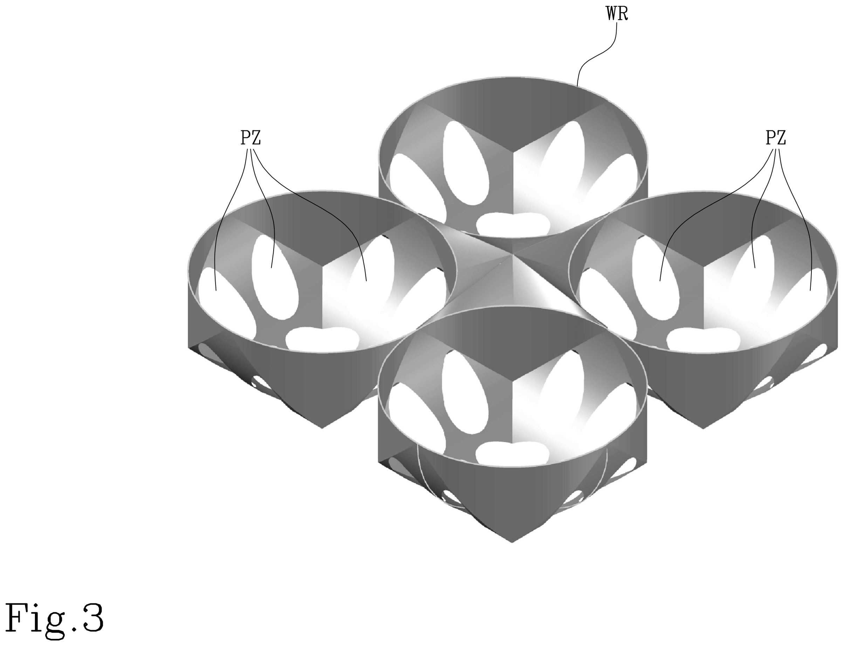

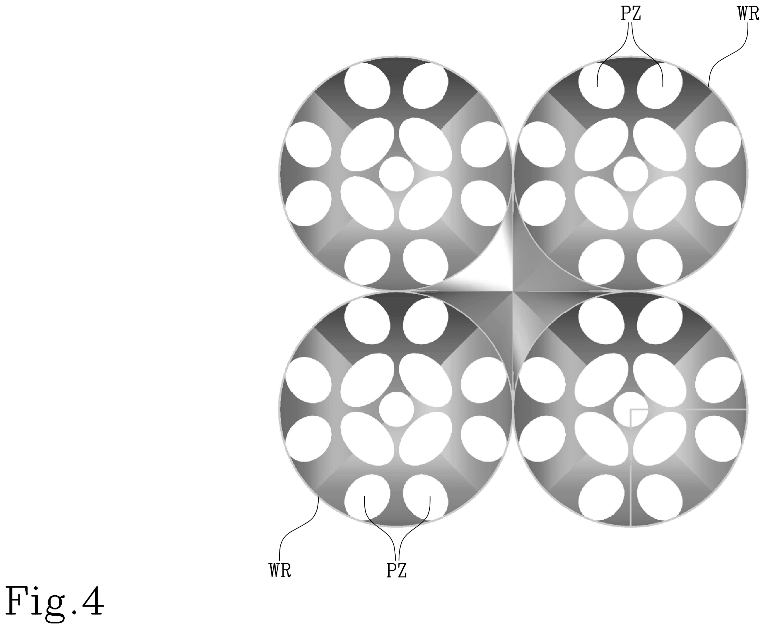

- figures 3 and 4 illustrate the waste collection surface according to one or more aspects of the present description

According to an aspect of the present description, the present invention provides a water treatment device. The wastewater treatment device comprises a liquid container containing the wastewater. A mixed microbial consortium of aerobic microorganisms is provided comprising halophilic microorganisms inside the container. The oxygen required for the activity of the aerobic microorganisms is provided inside the container, e.g., by means of openings provided for the container. The microorganisms grow a microbial bed 1. The microbes grow in the form of a film on the microbial bed. The microbial bed is placed inside the container so as to provide a contact surface between the microorganisms and the wastewater.

The microbial bed comprises a tray T with a growth zone free of holes, where the wastewater accumulates and on which the microorganisms grow, and a perforated zone, through which the wastewater passes.

The microbial bed preferably comprises a plurality of T trays. Each tray has a growth zone and a perforated zone. The trays are placed so that they are aligned along a longitudinal axis L and spaced apart from one another. The trays of the plurality of trays are placed along the longitudinal axis L so that the perforated zone of each tray is offset from the perforated zone of the adjacent tray with respect to the longitudinal axis, so that the wastewater passing through the perforated zone of each tray falls onto the growth zone of the adjacent tray.

It comprises a plurality of pockets P. Each pocket P has a lower wall BW and a plurality of side walls LW. Pockets of the plurality of pockets are separate from one another at the respective side walls LW. A first part of the pockets includes a lower wall BW free of holes, forming the growth zone, and a second part of the pockets includes a perforated lower wall BW, forming the perforated zone.

Each pocket P has a concave portion, formed by the side walls LW, and a convex portion, formed by the lower wall BW.

The microbial bed T is obtained by 3D printing in ABS. The surface roughness of the microbial bed obtained in this way allows for suitable adhesion for the growth of the microbes on the microbial bed, so as to avoid undesired phenomena, such as microbial wash-out once the microorganisms come into contact with the wastewater.

In particular, the microorganisms including at least one of the following microbial families:
- Haloarcula;
- Marinobacterium;
- Marinobacter;
- Halomonas.

At least one of the following microbial species is included in the microbial consortium:
- Haloarcula vallismortis;
- Haloarcula quadrata;
- Haloarcula marismortui;
- Marinobacterium lutimaris;
- Marinobacterium littorale;
- Marinobacter nauticus;
- Marinobacter squelenovorans;
- Marinobacter profunda;
- Halomonas halodenitrifi cans;
- Halomonas subglaciescola;
- Psychromonas marina.

Monitoring and regulating the salt concentration and/or the temperature and/or the pH inside the container is provided.

In particular, the temperature may be maintained between 10-60°C, temperatures above 60°C require a greater consumption of energy and are not preferred.

The preferred pH value is between 4-10. As regards the concentration of Salts, a concentration greater than 5% is preferred. The use of a medium is provided with a composition rich in NaCl dissolved in water, with the addition of other salts (Mg, Ca) and agar. Possible examples of those media are set out below:
HALOBACTERIUM MEDIUM
   Casamino acids 7.50 g
   Yeast extract 10.00 g
   Na3-citrate 3.00 g
   KCI 2.00 g
   MgSO4 x 7 H2O 20.00 g
   FeSO4 x 7 H2O 0.05 g
   MnSO4 x H2O 0.20 mg
   NaCl 250.00 g
   Agar 20.00 g
   Distilled water 1000.00
NATRONOBACTERIUM MEDIUM
   Casamino acids 15.0 g
   Na3-citrate x 2 H2O 3.0 g
   Glutamic acid 2.5 g
   MgSO4 x 7 H2O 2.5 g
   KCl 2.0 g
   NaCl 250.0 g
   Agar 20.0 g
   Distilled water 1000.00
NATRONOBACTERIA MEDIUM
   KH2PO4 1.00 g
   KCI 1.00 g
   NH4Cl 1.00 g
   MgSO4 x 7 H2O 0.24 g
   CaSO4 x 2 H2O 0.17 g
   Trace element solution SL-10
   (see medium 320) 1.00 ml
   Agar, if necessary 20.00 g
   NaCl 200.00 g
   Na2-glutamate 1.00 g
   Yeast extract (Fisher BioReagents BP1422) 5.00 g
   Casamino acids 5.00 g
   Na2CO3 5.00 g
   Distilled water 1000.00
HALOBACTERIA MEDIUM
   Yeast extract (Fisher BioReagents BP1422) 5.00 g
   Casamino acids 5.00 g
   Na-glutamate 1.00 g
   KCI 2.00 g
   Na3-citrate 3.00 g
   MgSO4 x 7 H2O 20.00 g
   NaCl 200.00 g
   FeCl2 x 4 H2O 36.00 mg
   MnCl2 x 4 H2O 0.36 mg
   Agar 20.00 g
   Distilled water 1000.00

The use of the wastewater treatment device may be provided according to the present description in a toilet without a connection to the sewer system.

In use, the wastewater is collected in the container where the trays are placed at different heights with holes allowing the wastewater to fall from the first tray to the successive ones. Microbes grow on the various trays in the form of a film, which degrade the wastewater in a clean manner. The arrangement on different trays, on which holes are arranged alternately with the continuous growth surface, allows the waste to spread uniformly over the different levels. Further, microbes grown on biofilm require a smaller supply of waste per volume, precisely because the surface/volume ratio is optimized.

## Claims

1. A wastewater treatment device comprising:
- a liquid container, configured for containing the wastewater;
- an oxygen supply unit providing oxygen to the container;
- a mixed microbial consortium of aerobic microorganisms comprising halophilic microorganisms;
- a microbial bed, placed inside the container, on which the microorganisms of the mixed microbial consortium grow and are in contact with the wastewater.

2. The wastewater treatment device according to claim 1, wherein the microbial bed comprises a tray having a growth zone free of holes, where the wastewater accumulates and on which the microorganisms grow, and a perforated zone, through which the wastewater passes.

3. The wastewater treatment device according to claim 2, wherein the microbial bed comprises a plurality of trays, wherein the trays of the plurality of trays are aligned along a longitudinal axis and spaced apart from one another.

4. The wastewater treatment device according to claim 3, wherein the trays (T) of the plurality of trays are placed along the longitudinal axis so that the perforated zone of each tray is offset from the perforated zone of the adjacent tray with respect to the longitudinal axis, such that the wastewater passing through the perforated zone of each tray falls on the growth zone of the adjacent tray.

5. The wastewater treatment device according to any of the previous claims, further comprising a regulation unit having:
- a temperature sensor and/or a pH sensor and/or a salt concentration sensor to detect the temperature and/or the pH and/or the salt concentration inside the liquid container;
- a regulation device to regulate the temperature and/or the pH and/or the salt concentration inside the liquid container in response to the detected value and according to a pre-set value for the temperature and/or the pH and/or the salt concentration.

6. The wastewater treatment device according to any of the previous claims, including at least one of the following microbial families:
- Haloarcula;
- Marinobacterium;
- Marinobacter;
- Halomonas.

7. The wastewater treatment device according to claim 6, wherein at least one of the following microbial species is included in the microbial consortium:
- Haloarcula vallismortis;
- Haloarcula quadrata;
- Haloarcula marismortui;
- Marinobacterium lutimaris;
- Marinobacterium littorale;
- Marinobacter nauticus;
- Marinobacter squelenovorans;
- Marinobacter profunda;
- Halomonas halodenitrifi cans;
- Halomonas subglaciescola;
- Psychromonas marina.

8. A method for treating wastewater, having the following steps:
- providing a liquid container with the wastewater;
- supplying oxygen to the container;
- providing the liquid container with a mixed microbial consortium of aerobic microorganisms comprising halophilic microorganisms;
- growing the microorganisms of said mixed microbial consortium on a microbial bed, placed inside the container,
- passing the wastewater through the microbial bed.

9. The method according to claim 8, wherein a plurality of trays is provided inside the liquid container, each tray having a growth zone free of holes, where the wastewater accumulates and on which the microorganisms grow, and a perforated zone, through which the wastewater passes, wherein the trays are placed in a way that they are aligned along a longitudinal axis and spaced apart from one another, wherein the trays of the plurality of trays are placed along the longitudinal axis so that the perforated zone of each tray is offset from the perforated zone of the adjacent tray with respect to the longitudinal axis, such that the wastewater passing through the perforated zone of each tray falls on the growth zone of the adjacent tray.

10. The method according to any of claims 8 to 9, comprising either of the following steps:
- regulating the temperature of the liquid container according to a pre-set temperature value, wherein the pre-set temperature is in a range of 10-60 °C;
- correcting the pH value of the liquid container according to a pre-set pH value, the pre-set pH value is either greater than 4 or less than 10,
- correcting the salt concentration of the culture medium used for the microorganisms according to a pre-set salt concentration value, the pre-set salt concentration value being greater than 5%.
